# EUROPÄISCHE PATENTANMELDUNG

(11) **EP 1 054 200 A2**
(43) Veröffentlichungstag der Anmeldung: **22.11.2000**
(21) Anmeldenummer: 00110335.7
(22) Anmeldetag: 13.05.2000
(51) Int. Cl.: F16K 31/08, F16K 31/06

(54) **Bistabiles elektromagnetisches Ventil**

(30) Priorität: 17.05.1999 DE 19922089
(71) Anmelder: SCHROTT, Harald, 88131 Lindau (DE)
(72) Erfinder: Ott, Hubert, 88212 Ravensburg (DE)
(74) Vertreter: Patentanwälte Eisele, Otten, Roth & Dobler

(57) **Zusammenfassung**

Es wird ein bistabiles elektromagnetisches Ventil (1) mit einer zwischen zwei Polschuhen (12, 13) angeordneten Ventilkammer (3) einem darin zwischen zwei Endstellungen verschiebbaren Ventilkörper (4), bei dem der Ventilkörper (4) als Magnetanker für einen Permanentmagneten (30 bis 33) ausgebildet ist und eine Steuerspule vorhanden ist. Die Erfindung soll eine große Freiheit in der Auswahl geeigneter Permanentmagnete, insbesondere im Hinblick auf deren Kosten ermöglichen. Dies wird erfindungsgemäß dadurch erreicht, daß wenigstens zwei Permanentmagnete (30 bis 34) vorgesehen sind, die wenigstens teilweise seitlich neben den Polschuhen (12, 13) angeordnet sind.

## Beschreibung

Die Erfindung betrifft ein bistabiles elektromagnetisches Ventil nach dem Oberbegriff des Anspruchs 1.

Derartige Ventile werden beispielsweise in Kühlmittelkreisläufen eingesetzt, bei denen eine Eingangsleitung wahlweise zwei Ausgangsleitungen zugeschaltet wird. Ein solcher Kühlmittelkreislauf ist beispielsweise in der Druckschrift DE 3 718 490 beschrieben.

Bei diesem Ventil wird die bistabile Situation dadurch erreicht, daß zwei Permanentmagnete seitlich neben der Ventilkammeranordnung zwischen zwei Polschuhen angeordnet sind und mit dem jeweils gleichen Pol zur Ventilkammer hinzeigen. Das Magnetfeld dieser beiden Magnete teilt sich dadurch mittig in Richtung zu jeweils einem Polschuh auf, so daß der Ventilkörper zwei Endpositionen an den Polschuhen besitzt, in denen er durch diese Permanentmagnete gehalten wird.

Zwar kommt ein Ventil der beschriebenen Art grundsätzlich mit zwei Magneten aus, diese sind jedoch in ihrer Spezifikation sehr genau den geometrischen Verhältnissen sowie den gewünschten Anzugskräften des Ventils anzupassen.

Aufgabe der Erfindung ist es demgegenüber, ein bistabiles elektromagnetisches Ventil vorzuschlagen, bei dem eine größere konstruktive Freiheit in Bezug auf die Auswahl der verwendeten Magnete vorliegt.

Diese Aufgabe wird ausgehend von einem Kühlmittelventil der eingangs genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Ventil dadurch aus, daß wenigstens zwei Permanentmagnete vorgesehen sind, die wenigstens teilweise seitlich neben den Polschuhen angeordnet sind. Hierbei gibt es wenigstens zwei grundsätzlich verschiedene Möglichkeiten der Ausrichtung der Permanentmagnete, wobei jede dieser Alternativen neue Möglichkeiten in der Dimensionierung der Magnete bietet. Je nach Marktlage kann daher ein erfindungsgemäßes bistabiles Ventil mit Permanentmagneten ausgestattet werden, die kostengünstig erhältlich sind, wodurch die Fertigungskosten für das gesamte Ventil gesenkt werden.

Aus Symmetriegründen wird die Verwendung von vier Permanentmagneten empfohlen, die jeweils beidseits wenigstens teilweise seitlich neben jedem der beiden Polschuhe angeordnet sind. Diese Anordnung verhindert ein Verkanten des Ventilkörpers durch einen etwaigen einseitigen Anzug eines Permanentmagneten. Durch die symmetrische Anordnung wird ein derartiger einseitiger Anzug unterbunden.

Eine andere Form der symmetrischen Ausbildung wäre die Verwendung von Ringmagneten, sofern solche in vergleichbaren Kosten erhältlich sind, was grundsätzlich künftig nicht auszuschließen ist.

In einer besonderen Ausführungsform der Erfindung werden die Magnetpole der Permanentmagnete parallel zur Ventillängsachse angeordnet. In diesem Fall empfiehlt es sich, die Permanentmagnete seitlich neben der Übergangszone von dem Ventilkörper in der jeweiligen Endstellung zum jeweiligen Polschuh anzuordnen. Üblicherweise befindet sich in dieser Übergangszone ein Spalt zwischen dem Ventilkörper und dem Polschuh, damit nicht der gesamte Ventilkörper beim Schalten auf den Polschuh anschlägt, sondern lediglich ein Dichtelement auf seinem entsprechenden Ventilsitz. Falls ein derartiger Spalt vorhanden ist, befindet sich der Permanentmagnet auf Höhe dieses Spaltes, andernfalls im Bereich des Anschlags zwischen Ventilkörper und Polschuh. Ein derart angeordneter Magnet kann insgesamt kleiner ausgebildet werden als bei Ventilen der einleitend genannten Art. Dies ist durch die Anordnung unmittelbar neben der gewünschten Wirkungszone, in der der Ventilkörper am Polschuh gehalten werden soll, möglich.

In einer anderen erfindungsgemäßen Ausführungsform werden die Magnetpole der Permanentmagneten so angeordnet, daß sie quer zur Ventillängsachse stehen. Dies entspricht einer Orientierung gemäß den einleitend genannten Ventilen, wobei nunmehr sich die Permanentmagnete wenigstens teilweise seitlich neben den Polschuhen befinden. Insgesamt ist hierdurch die Verwendung größerer Magnete möglich, da sich diese über die gesamte Länge der Polschuhe erstrecken können. Die Polschuhe selbst können bei Bedarf sogar länger ausgebildet werden, um mehr Raum für die Permanentmagnete zur Verfügung zu stellen. Diese Ausführungsform hat den Vorteil, volumenmäßig größere Magnete aus preiswerterem Material zu verwenden, uni das entsprechende magnetische Anzugsmoment zu erzeugen. Derartige Magnete könnten beispielsweise aus sogenannten Hartferriten gebildet werden, die kostengünstig im Handel erhältlich sind.

Bei einer Magnetanordnung gemäß dem Stand der Technik ist die Ausdehnung entlang der Längsachse durch die Länge der Ventilkammer begrenzt. Diese Länge ergibt sich aus der Länge des Ventilkörpers sowie des Ventilhubes. Beides sollte naturgemäß möglichst klein gehalten werden, um die Aufprallenergie des Ventilkörpers auf dem Ventilsitz aus Gründen der Lebensdauer sowie der Geräuschentwicklung möglichst gering zu halten.

Bei der beschriebenen Polungsanordnung der Permanentmagnete quer zur Ventillängsachse werden diese vorteilhafterweise so angeordnet, daß sie nicht über den inneren Rand der Polschuhe in Richtung zur Ventilkammer hinausragen. Hierdurch wird die Geometrie des Magnetfeldes im Übergangsbereich zwischen Polschuhe und Ventilkörper den Anforderungen entsprechend besser ausgebildet. Die magnetischen Feldlinien sollten in dieser Übergangszone möglichst parallel zur Ventillängsachse verlaufen, um entsprechende Anzugskräfte auf den Ventilkörper in Richtung auf die in die Polschuhe eingearbeiteten Ventilsitze zu erzeugen. Daher ist es bei dieser Ausrichtung der Magnetpole zu vermeiden, daß die Magnete in die Höhe der Übergangszone, d. h. des Spaltes zwischen Ventilkörper und Polschuh hineinragen. Aus Gründen dieser Feldgeometrie wurde beim Stand der Technik eine Magnetanordnung vollständig zwischen den Polschuhen neben der Ventilkammer gewählt, während vorliegend gerade die entgegengesetzte Anordnung gewählt wird, in der die Magnete gerade nicht über den Rand der Polschuhe in Richtung der Ventilkammer hineinragen.

Zur Verbesserung der Geometrie des Magnetfeldes ist es möglich, Rückschlußbleche ausgehend von der Permanentmagneten anzubringen, die sich in den Bereich der Ventilkammer erstrecken. Diese Rückschlußbleche dienen dazu, die Feldlinien zu bündeln und möglichst im Bereich der Mitte der Ventilkammer in den in der Ventilkammer befindlichen als Magnetanker dienenden Ventilkörper einzuleiten. Durch diese Maßnahme wird das Magnetfeld im Übergangsbereich zwischen Polschuh und Ventilkörper gebündelt und orientiert, so daß eine größere Anzugskraft zu erzielen oder aber ein schwächerer Magnet zu verwenden ist.

In einer Weiterbildung dieser Ausführungsform wir ein gemeinsames Rückschlußblech für zwei Permanentmagnete vorgesehen. Dies kann beispielsweise so ausgeführt werden, daß die aus zwei Magneten und Rückschlußblech befindliche Einheit von außen als ein einziges Montageteil an den Ventilkörper anzubringen sind.

Bei der Verwendung von Rückschlußblechen werden diese vorzugsweise so geformt, daß sie im mittleren Bereich der Ventilkammer in der Nähe von deren Wandung enden. Hierdurch erfolgt eine gute Einleitung der magnetischen Feldlinien in den Ventilkörper, die letztendes dazu führt, daß die Feldlinien im Übergangsbereich zwischen Ventilkörper und Polschuh möglichst achsenparallel und dichtgebündelt ausgebildet werden.

In vorteilhafter Weise werden keine die Polschuhe durchgehend verbindenden Rückschlußbleche vorgesehen. Durch die Vermeidung derartiger Rückschlußbleche wird eine größere Freiheit in der Positionierung der Steuerspule möglich. Die Steuerspule braucht hierbei nicht mehr in axialer Verlängerung der Ventillängsachse angeordnet werden, sondern kann auch je nach Bedarf seitlich angebracht sein.

In einer besonders vorteilhaften Ausführungsform wird die Steuerspule hierbei parallel zur Ventillängsachse seitlich neben der Ventilkammer angeordnet. Hierdurch ergibt sich ein symmetrischer Aufbau, so daß durch die Einwirkung der Steuerspule mit einem Schaltimpuls der gleichen Stromstärke und der gleichen Zeitdauer jeweils die gleiche Aufprallenergie des Dichtelements auf dem jeweiligen Ventilsitz in beide Richtungen erzeugt wird. Bei unsymmetrischer Spulenanordnung muß bislang bei gleich großen Schaltimpulsen die Größe des Schaltimpulses auf den von der Spule am weitesten beabstandeten Ventilsitz angepaßt werden. Bei der beschriebenen symmetrischen Anordnung kann durch entsprechende Anpassung der Schaltimpulse die Aufprallenergie verringert werden, wobei für beide Schaltschritte die gleichen Bedingungen eingehalten werden und lediglich der Steuerstrom umgepolt werden muß.

Verschiedene Ausführungsbeispiele der Erfindung sind in der Zeichnung dargestellt und werden anhand der Figuren nachfolgend näher erläutert.

Im einzelnen zeigen
- Fig. 1: einen schematischen Schnitt durch ein teilweise dargestelltes bistabiles Ventil in einer ersten Ausführungsform,
- Fig. 2: eine vergleichbare Darstellung eines zweiten Ausführungsbeispiels,
- Fig. 3: eine vergleichbare Darstellung eines dritten Ausführungsbeispiels.

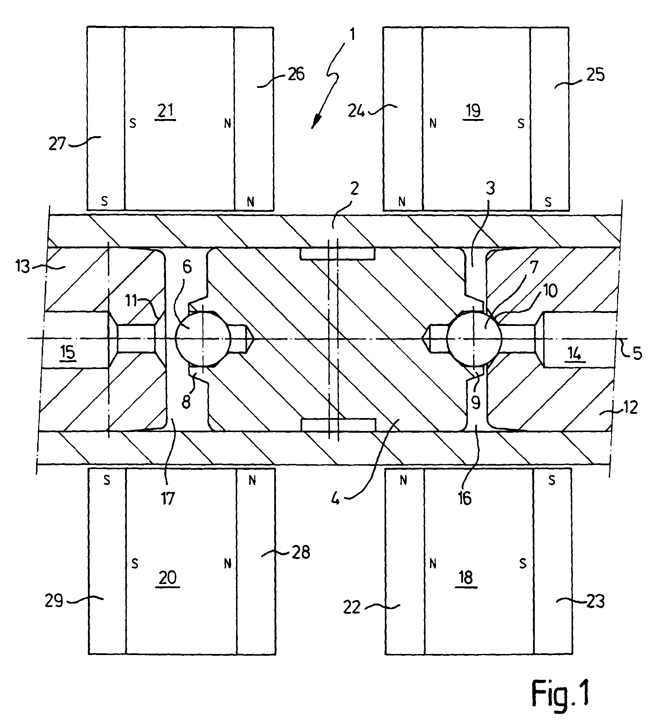

Das Ventil 1 gemäß Fig. 1 umfaßt ein rohrförmiges Gehäuse 2, in dessen Innern eine Ventilkammer 3 angeordnet ist. In der Ventilkammer 3 ist ein als Magnetanker ausgebildeter Ventilkörper 4 in Richtung der Ventillängsachse 5 verschiebbar gelagert.

Im Ventilkörper 4 sind zwei Kugeln 6, 7 als Dichtkörper in jeweils einer Fassung 8, 9 befestigt. Den Dichtkörpern 6, 7 in Richtung der Ventillängsachse 5 gegenüberliegend sind zwei Ventilsitze 10, 11 in Polschuhen 12, 13 beispielsweise durch Randschichthärtung eingearbeitet. Die Polschuhe 12, 13 sind in Verlängerung der Ventilsitze 10, 11 jeweils mit einer Längsbohrung 14, 15 versehen.

In der Übergangszone 16, 17, die vorliegend aufgrund der konstruktiven Ausbildung des Ventilkörpers 4 mit Dichtkörpern 6, 7 als Spalt zwischen dem Dichtkörper 4 und dem jeweiligen Polschuh 12, 13 ausgebildet ist, befinden sich seitlich neben dem Gehäuse zwei jeweils zwei Permanentmagnete 18, 19 bzw. 20, 21, die von jeweils zwei Rückschlußblechen 22 bis 29 umgeben sind. Die Permanentmagnete 18, 19, 20, 21 sind so angeordnet, daß ihre Nord-Südpolachse (N-S) parallel zur Ventillängsachse 5 verläuft. Die gleichnamigen Pole, im vorliegenden Fall die Nordpole, weisen hierbei zur Ventilmitte hin, das heißt, zwei jeweils auf einer Seite angeordnete Permanentmagnete 18, 20 bzw. 19, 21 weisen mit ihrem gleichnamigen Pol aufeinander zu.

Durch die Rückschlußbleche 22 bis 29 wird das Magnetfeld eines jeden Permanentmagneten 18 bis 21 zum Ventilgehäuse 2 hingeführt. Dies ist durch entsprechende Buchstaben N, S an den Rückschlußblechen symbolisiert. Der Magnetfeldkreis wird über die Polschuhe 13 und den Ventilkörper 4, der als Magnetanker ausgebildet ist, im Innern des Ventils 1 geschlossen, und zwar dergestalt, daß die Feldlinien im wesentlichen parallel entlang der Längsachse 5 verlaufen. Hierdurch wird der Ventilkörper 4 stabil in seinen Endstellungen gehalten, in denen die Dichtkörper 6, 7 auf den jeweiligen Ventilsitzen 10, 11 auf liegen. Das Umschalten von der einen Endstellung in die andere kann mittels einer Steuerspule erfolgen, die hierzu mit kurzen Stromimpulsen der entsprechenden Polarität beaufschlagt wird.

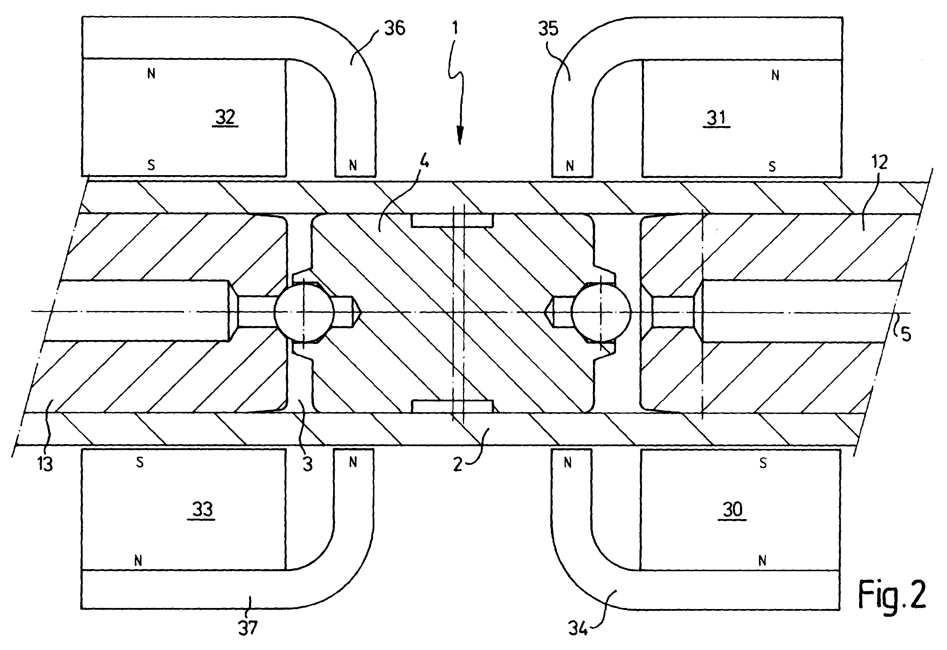

In der Ausführungsform gemäß Fig. 2 sind anstelle der mit ihrer Polarität parallel zur Ventillängsachse 5 angeordneten Permanentmagnete 18, 19, 20, 21 vier Permanentmagnete 30, 31, 32, 33 so angeordnet, daß ihre Nord-Südpolachse (N-S) quer zur Ventillängsachse 5 angeordnet ist. Die Permanentmagnete 30 bis 33 sind hierbei seitlich neben den Polschuhen 12, 13 angebracht, wobei sie nicht in Richtung der Ventilkammer 3 über den Rand der Polschuhe 12, 13 hinausragen.

Gebogene Rückschlußbleche 34, 35, 36, 37 sind auf der vom Ventilgehäuse 2 wegweisenden Seite der Permanentmagnete 30, 31, 32, 33 angebracht und im Bereich der Ventilkammer 3 bzw. des Ventilkörpers 4 zur Ventillängsachse 5 hingebogen. Auch durch diese Magnetanordnung werden Magnetkreise ausgebildet, die zwischen den Polschuhen 12, 13 und dem Ventilkörper 4 im wesentlichen parallel zur Ventillängsachse 5 verlaufen und im Bereich jedes Ventilsitzes 10, 11 entgegengesetzt gerichtet sind. Bei dieser Art der Magnetanordnung 30, 31, 32, 33 ist es von Vorteil, wenn die Magnete wie beschrieben nicht in den Bereich der Ventilkammer 3 hineinragen. Sie können statt dessen entlang der Polschuhe 12, 13 beliebig ausgedehnt werden, weshalb für diese Magnetanordnung vor allem großvolumige Magnete aus preiswertem Material, beispielsweise Hartferrite geeignet sind.

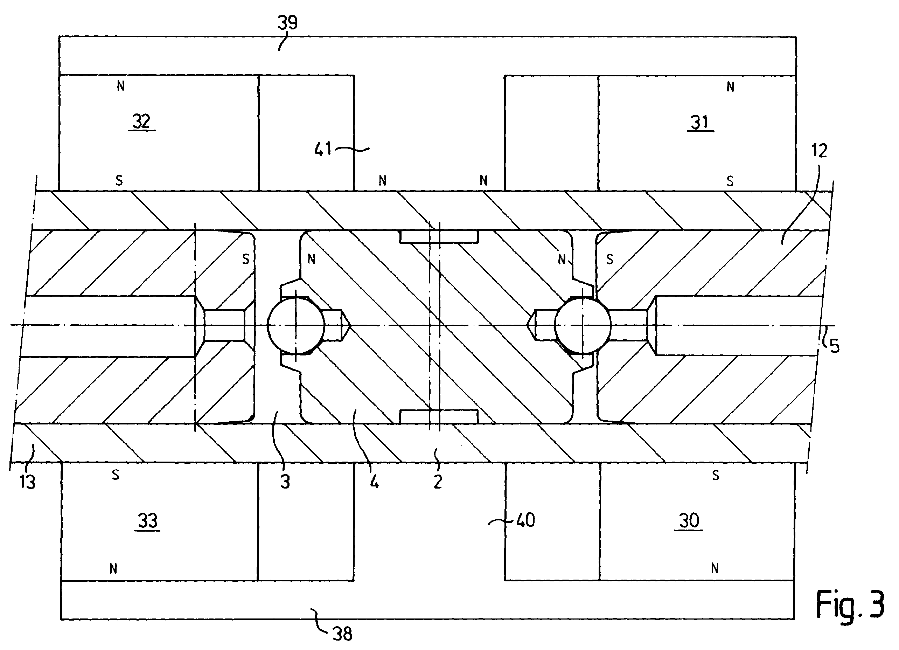

Die Ausführungsform gemäß Fig. 3 entspricht im wesentlichen der vorbeschriebenen Ausführungsform gemäß Fig. 2. Abweichend hiervon sind nunmehr jedoch beidseits des Ventilgehäuses 2 zwei die Permanentmagnete 30, 31, 32, 33 verbindende Rückschlußbleche 38, 39 vorgesehen, die mittig mit einem Vorsprung 40, 41 versehen sind. Bei dieser Anordnung können jeweils zwei Permanentmagnete 30, 33, bzw. 31, 32 gemeinsam mit dem jeweiligen Rückschlußblech 38, 39 als Baueinheit ausgeführt werden. Diese wird beidseits des Ventilgehäuses 2 montiert.

Der jeweilige Magnetkreis wird über die Vorsprünge 40, 41 in den Ventilkörper 6, der als Magnetanker dient, eingeleitet und über die Polschuhe 12, 13 im Innern der Ventilkammer 3 geschlossen. Auch hier ergibt sich der bereits anhand der obigen Ausführungsbeispiele beschriebene Verlauf der zu jedem Permanentmagneten 30 bis 33 zuzuordnenden Feldlinien, die im wesentlichen parallel zur Ventillängsachse 5 im Innern des Ventils verlaufen und so für die stabilen Endstellungen des Ventilkörpers 4 sorgen.

Auch die Ausführung gemäß Fig. 3 ermöglicht die Verwendung großvolumiger Magnete, da auch hier der gesamte Seitenbereich der Polschuhe 12, 13 zur Anordnung der Permanentmagnete 30 - 33 zur Verfügung steht.

Die beschriebenen Magnetanordnungen sind für alle Arten von bistabilen elektromagnetischen Ventilen verwendbar. Besonders geeignet sind sie für Ventile in einem Kältemittelkreislauf, die besonders hohe Anforderungen an die Dichtigkeit sowohl nach außen als auch bezüglich der Ventilkörper 6 und der Ventilsitze 10, 11 stellen. Hierbei wird im Allgemeinen zumindest nach außen hin Dichtigkeit gegenüber Helium und zugleich eine hohe Lebensdauer mit sehr vielen Schaltvorgängen bei möglichst geringer Geräuschentwicklung gefordert. Dafür eignet sich besonders die Anordnung des Ventilkörpers 4 im Innern der Ventilkammer 3 mit den entsprechenden kugelförmigen Dichtkörpern 6, 7, die beispielsweise aus einem harten Metall bestehen können.

### Bezugszeichenliste:

- 1: Ventil
- 2: Gehäuse
- 3: Ventilkammer
- 4: Ventilkörper
- 5: Ventillängsachse
- 6: Dichtkörper
- 7: Dichtkörper
- 8: Fassung
- 9: Fassung
- 10: Ventilsitz
- 11: Ventilsitz
- 12: Polschuh
- 13: Polschuh
- 14: Längsbohrung
- 15: Längsbohrung
- 16: Übergangszone
- 17: Übergangszone
- 18: Permanentmagnet
- 19: Permanentmagnet
- 20: Permanentmagnet
- 21: Permanentmagnet
- 22: Rückschlußblech
- 23: Rückschlußblech
- 24: Rückschlußblech
- 25: Rückschlußblech
- 26: Rückschlußblech
- 27: Rückschlußblech
- 28: Rückschlußblech
- 29: Rückschlußblech
- 30: Permanentmagnet
- 31: Permanentmagnet
- 32: Permanentmagnet
- 33: Permanentmagnet
- 34: Rückschlußblech
- 35: Rückschlußblech
- 36: Rückschlußblech
- 37: Rückschlußblech
- 38: Rückschlußblech
- 39: Rückschlußblech
- 40: Vorsprung
- 41: Vorsprung

## Patentansprüche

1. Bistabiles, elektromagnetisches Ventil mit einer zwischen zwei Polschuhen angeordneten Ventilkammer, einem darin zwischen zwei Endstellungen verschiebbaren Ventilkörper, wobei der Ventilkörper als Magnetanker für wenigstens einen Permanentmagneten sowie eine Steuerspule ausgebildet ist, dadurch gekennzeichnet, daß wenigstens zwei Permanentmagnete (18 bis 21) bzw. (30 bis 33) vorgesehen sind, die jeweils beidseits wenigstens teilweise seitlich neben den beiden Polschuhen (12, 13) angeordnet sind.

2. Ventil nach Anspruch 1, dadurch gekennzeichnet, daß vier Permanentmagnete (18 bis 21) bzw. (30 bis 33) jeweils beidseits wenigstens teilweise neben den beiden Polschuhen (12, 13) angeordnet sind.

3. Ventil nach einem der vorgenannten Ansprüche, dadurch gekennzeichnet, daß die Verbindungsachse der Magnetpole (N-S) der Permanentmagnete (18 bis 21) parallel zur Ventilachse (5) angeordnet sind.

4. Ventil nach einem der vorgenannten Ansprüche, dadurch gekennzeichnet, daß die Permanentmagnete (18 bis 21) seitlich neben der Übergangszone (16, 17) des Ventilkörpers (4) in der jeweiligen Endstellung zum jeweiligen Polschuh (12, 13) angeordnet sind.

5. Ventil nach einem der vorgenannten Ansprüche, dadurch gekennzeichnet, daß die Verbindungsachse der Magnetpole (N-S) der Permanentmagneten (30 bis 33) quer zur Ventillängsachse (5) angeordnet sind.

6. Ventil nach einem der vorgenannten Ansprüche, dadurch gekennzeichnet, daß die Permanentmagnete (30 bis 33) in Richtung zur Ventilkammer (3) nicht über die Polschuhe (12, 13) hinausragen.

7. Ventil nach einem der vorgenannten Ansprüche, dadurch gekennzeichnet, daß ein Rückschlußblech (22 bis 29, 34 bis 39) ausgehend von wenigstens einem Permanentmagneten (30 bis 33) vorhanden ist, das sich in den Bereich der Ventilkammer (3) und somit auch des Ventilkörpers (4) erstreckt.

8. Ventil nach einem der vorgenannten Ansprüche, dadurch gekennzeichnet, daß ein die zwei Permanentmagnete verbindendes Rückschlußblech (38, 39) vorgesehen ist.

9. Ventil nach einem der vorgenannten Ansprüche, dadurch gekennzeichnet, daß das Rückschlußblech (38, 39) auf Höhe des Ventilkörpers (4) zur Ventilkammer (3) hingebogen ist und/oder einen entsprechenden Vorsprung aufweist, so daß es in der Nähe des Ventilgehäuses (2) endet.

10. Ventil nach einem der vorgenannten Ansprüche, dadurch gekennzeichnet, daß keine die Polschuhe (12, 13) durchgehend verbindende Rückschlußbleche vorgesehen sind.

11. Ventil nach einem der vorgenannten Ansprüche, dadurch gekennzeichnet, daß die Steuerspule nicht in axialer Verlängerung der Ventillängsachse (5) angeordnet ist.

12. Ventil nach einem der vorgenannten Ansprüche, dadurch gekennzeichnet, daß die Steuerspule parallel zur Ventillängsachse (5) seitlich neben der Ventilkammer (3) angeordnet ist.

13. Kälteerzeugungskreis für eine Kühlanlage mit mehreren Kühlräumen, mit einem Kompressor, mit einem Kondensator, mit mehreren Verdampfern, die jeweils einem der Kühlräume zugeordnet sind, sowie mit wenigstens einem elektrischen Umsteuerventil zur Verbindung des Kondensators mit einem oder mehreren der Verdampfer entsprechend vorbestimmten Betriebsarten dadurch gekennzeichnet, daß das Umsteuerventil gemäß einem der vorgenannten Ansprüche ausgebildet ist.

14. Haushaltsgerät mit einem Kälteerzeugungskreis, insbesondere Kühlschrank oder Kühltruhe, dadurch gekennzeichnet, daß der Kälteerzeugungskreis gemäß Anspruch 13 ausgebildet ist.
